# FASCICULE DE BREVET EUROPEEN

(11) **EP 1 359 127 B1**
(45) Date de publication et mention de la délivrance du brevet: **20.06.2007**
(21) Numéro de dépôt: 03290927.7
(22) Date de dépôt: 15.04.2003
(51) Int. Cl.: C03B 37/012

(54) **Procédé de fabrication de préformes de fibres optiques**
Verfahren zur Herstellung von Vorformen für optische Fasern
Process for producing optical fibre preforms

(30) Priorité: 29.04.2002 FR 0205374
(43) Date de publication de la demande: 05.11.2003
(73) Titulaire: Draka comteq B.V., 1083 HJ Amsterdam (NL)
(72) Inventeur: Jolly, Jacques, 78400 Chatou (FR); Campion, Jean-Florent, 78700 Conflans St Honorine (FR); Herchuelz, Virginie, 78570 Andresy (FR); Fauche, Rémi, 78260 Achères (FR); Tutin, Eric, 95370 Montigny les Cormeilles (FR)
(74) Mandataire: op den Brouw-Sprakel, Vera Stefanie Irene

(56) Documents cités:
- EP-A- 0 878 449
- EP-A- 0 992 460
- EP-A- 1 156 018
- PATENT ABSTRACTS OF JAPAN vol. 2000, no. 12, 3 janvier 2001 (2001-01-03) & JP 2000 256024 A (SHIN ETSU CHEM CO LTD), 19 septembre 2000 (2000-09-19)

## Description

L'invention concerne le domaine des procédés de fabrication de préformes de fibres optiques. Des fibres optiques sont ensuite obtenues par fibrage à partir de ces préformes. L'invention peut s'appliquer à différents procédés de fabrication de préforme, notamment les procédés OVPO (abréviation de l'anglais « outside vapor phase oxydation »), les procédés VAD (abréviation de l'anglais « vapor axial déposition »), les procédés de type CVD (abréviation de l'anglais « chemical vapor deposition »).

Selon un art antérieur, les préformes obtenues par l'un ou l'autre de ce procédé présentent une importante dispersion de diamètre entre préformes, notamment dans le cas d'un procédé de type CVD. Cela entraîne plusieurs inconvénients lors du procédé de fibrage. Lors du procédé de fibrage, la préforme est partiellement introduite dans un four de fibrage. Un joint situé autour de la préforme est nécessaire pour maintenir l'étanchéité entre l'intérieur du four de fibrage et le milieu extérieur au four de fibrage. Dans la mesure où la dispersion de diamètre entre préformes est importante, il est nécessaire d'utiliser plusieurs jeux de joints de diamètre différent de manière à couvrir la majeure partie de la plage de dispersion de diamètre entre préformes. En outre, plus la dispersion de diamètre entre préformes devient importante, plus la régulation automatique du fibrage devient complexe, notamment au niveau de l'adaptation tant des puissances de chauffe appliquées, que de la vitesse de fibrage, et ce, en particulier, lors du démarrage du procédé de fibrage ainsi qu'à la fin du procédé de fibrage. Par ailleurs, l'appariement de deux préformes pour les souder bout à bout avant fibrage devient plus difficile au fur et à mesure que la dispersion de diamètre entre préformes augmente.

Dans le but de réduire les inconvénients précédemment évoqués, l'invention propose de modifier le procédé de fabrication des préformes par l'ajout d'une étape. Ladite étape peut être ajoutée en temps masqué, c'est-à-dire être réalisée simultanément avec une autre étape et donc ne pas allonger la durée totale du procédé de fabrication. Ladite étape est une étape d'étirage ou de compression ou encore une étape d'étirage suivie ou précédée d'une étape de compression, avec un taux d'étirage et/ou de compression réduisant la dispersion de diamètre entre préformes. Ainsi, un seul jeu de joints d'étanchéité de même diamètre entre eux peut devenir suffisant ce qui simplifie nettement le procédé de fibrage à partir des préformes. De plus, la régulation automatique du fibrage devient plus aisée. Chacune de ces simplifications permet d'augmenter la productivité du procédé de fibrage utilisé. Par ailleurs, l'appariement par soudure de deux préformes bout à bout devient également plus aisé.

Selon un autre art antérieur, décrit dans la demande de brevet EP 1156018, il est connu d'utiliser une étape pendant laquelle des opérations d'étirage et/ou de compression sont réalisées le long d'une préforme, les taux d'étirage et/ou de compresesion variant le long de la préforme. Cette étape permet notamment de réduire la dispersion de diamètre le long d'une même préforme. Il est connu un procédé de fabrication d'une préforme primaire de fibre optique comprenant une étape de compression de la préforme primaire avec un taux de compression restant constant pour cette préforme. La préforme primaire comprimée est placée dans un tube de silice pure, quel tube est ensuite contracté sur la préforme primaire.

Selon l'invention, il est prévu une procédé de fabrication de préformes de fibres optiques comprenant une étape d'étirage de la préforme avec un taux d'étirage restant constant pour une même préforme et pouvant varier d'une préforme à l'autre en fonction de leur diamètre moyen respectif de manière à réduire la dispersion de diamètre moyen entre préformes, le procédé de fabrication comprenant une étape de réalisation d'une préforme primaire suivie d'une étape de réalisation d'une préforme finale à partir de la préforme primaire caractérisé en ce que l'étape d'étirage est une étape d'étirage de la préforme finale.

Selon l'invention, il est prévu une procédé de fabrication de préformes de fibres optiques comprenant une étape de compression de la préforme avec un taux de compression restant constant pour une même préforme et pouvant varier d'une préforme à l'autre en fonction de leur diamètre moyen respectif de manière à réduire la dispersion de diamètre moyen entre préformes, le procédé de fabrication comprenant une étape de réalisation d'une préforme primaire suivie d'une étape de réalisation d'une préforme finale à partir de la préforme primaire caractérisé en ce que l'étape de compression est une étape de compression de la préforme finale.

Selon l'invention, il est encore prévu un procédé de fabrication de préformes de fibres optiques comprenant une étape d'étirage de la préforme suivie ou prédédée d'une étape de compression de la préforme dont les taux d'étirage et de compression sont différants entre eux pour que le taux d'étirage ou de compression résultant pour la préforme soit non nul, restent chacun constant pour une même préforme et peuvent varier d'une préforme à l'autre en fonction de leur diamètre moyen respectif de manière à réduire la dispersion de diamètre moyen entre préformes.

L'invention sera mieux comprise et d'autres particularités et avantages apparaîtront à l'aide de la description ci-après et des dessins joints, donnés à titre d'exemples, où :
- la figure 1 représente schématiquement des histogrammes mettant en évidence la réduction de la dispersion de diamètre moyen entre préformes par l'utilisation du procédé de fabrication selon l'invention ;
- la figure 2 représente schématiquement des courbes obtenues à partir des histogrammes de la figure 1 par lissage et mettant en évidence la réduction de la dispersion de diamètre moyen entre préformes par l'utilisation du procédé de fabrication selon l'invention.

L'étape d'étirage peut consister par exemple à déplacer une source de chaleur le long d'une préforme de manière à chauffer une zone de la préforme à un instant donné. Par application de mouvements d'étirement aux extrémités de la préforme, celle-ci est étirée au niveau de la zone chauffée et son diamètre se réduit. De proche en proche, au cours du temps, toute la préforme est ainsi étirée, avec pour conséquence une réduction de son diamètre. La source de chaleur est par exemple une torche à plasma ou par exemple un chalumeau. L'étape de compression peut être similaire, mais ce sont des mouvements de compression qui sont appliqués pour comprimer la préforme dont le diamètre alors augmente.

Dans le cas par exemple d'un procédé de type CVD avec une étape de recharge, comprenant successivement une étape de préchauffage d'une préforme primaire, une étape de dépôt de recharge autour de la préforme primaire afin d'obtenir une préforme finale, une étape de glaçage peu chaud pour nettoyer la surface de la préforme finale, l'étape d'étirage ou l'étape de compression est une étape d'étirage ou une étape de composition de la préforme finale.

Dans les autres cas par exemple de procédés de fabrication de préformes comprenant une étape de réalisation d'une préforme primaire suivie d'une étape de réalisation d'une préforme finale à partir de la préforme primaire, l'étape d'étirage ou de compression est une étape d'étirage ou de compression de la préforme finale. Corriger la dispersion de diamètre entre préformes le plus tôt possible dans le procédé de fabrication alors que le diamètre des préformes n'est pas encore trop élevé est plus efficace. Dans le cas où le procédé de fabrication de préformes comprend une étape d'étirage et une étape de compression, les deux étapes d'étirage et de compression sont des étapes d'étirage et de compression de la préforme finale.

De préférence, lors de l'étape d'étirage et/ou lors de l'étape de compression, la préforme est en position horizontale ; ladite préforme peut toutefois être en position verticale. La position horizontale présente l'avantage d'une utilisation et d'une maintenance qui sont ainsi rendues plus pratiques. Etant donné que la zone de la préforme chauffée à chaque instant est peu étendue et que le matériau de la préforme présente une viscosité élevée, il y a peu de risque de déformation, sous l'effet de la gravité, de la préforme en position horizontale, puisque la préforme est en rotation pendant le chauffage.

Dans un premier mode de réalisation de l'invention, le procédé de fabrication de préformes de fibres optiques comprend une étape d'étirage de la préforme avec un taux d'étirage restant constant pour une même préforme et pouvant varier d'une préforme à l'autre en fonction de leur diamètre moyen respectif de manière à réduire la dispersion de diamètre moyen entre préformes. La réduction de la dispersion du diamètre entre préformes permet une uniformisation avantageuse du procédé de fibrage des préformes. Le taux d'étirage choisi reste le même tout le long de la préforme. D'une préforme à l'autre, les taux d'étirage choisis sont différents dans la mesure où les diamètres d'origine des préformes respectives sont différents. Soient deux préformes dont l'une a un diamètre d'origine, c'est-à-dire avant l'étape d'étirage, qui est plus élevé que le diamètre d'origine de l'autre. Le taux d'étirage de la préforme à diamètre d'origine plus élevé sera choisi plus grand que le taux d'étirage de la préforme à diamètre d'origine moins élevé, de manière à ce que les diamètres finaux des deux préformes soient préférentiellement le plus proche possible l'un de l'autre voire pratiquement identiques et en tout cas moins différents que les diamètres d'origine correspondants. Le diamètre final, c'est-à-dire après étirage, de chaque préforme est alors inférieur ou égal à son diamètre d'origine. Le taux d'étirage constant pour une préforme donnée en fonction de son diamètre d'origine et en fonction de son diamètre final visé peut être aisément calculé de manière automatique par le dispositif d'étirage. Ainsi, cette étape d'étirage à taux constant pour une même préforme a pour but de réaliser un étirage homogène de chaque préforme, le taux d'étirage variant d'une préforme à l'autre en fonction de leur diamètre d'origine et étant choisi de manière à réduire la dispersion des diamètres finaux, c'est-à-dire après étirage, des dites préformes. Le diamètre d'une préforme n'étant en général pas parfaitement constant le long de la préforme, les diamètres d'origine et finaux considérés précédemment sont des diamètres moyens. On constate qu'en réalité l'étirage à taux constant n'est pas complètement homogène le long de la préforme mais qu'il a sur une préforme dont le matériau constitutif présente une certaine viscosité un effet de lissage sur les variations de diamètre le long de ladite préforme et qu'il a ainsi pour conséquence supplémentaire une réduction de la dispersion de diamètre pour une même préforme le long de celle-ci, ce qui est un avantage supplémentaire s'ajoutant à l'avantage de réduction de dispersion de diamètre moyen entre préformes. Des variations de diamètre trop importantes le long d'une préforme peuvent en effet entraîner d'une part le rejet des fibres optiques obtenues à partir de ladite préforme pour cause de non-respect des specifications concernant les paramètres de propagation desdites fibres optiques et d'autre part un risque de casse de la fibre optique lors du fibrage de ladite préforme.

Dans un deuxième mode de réalisation de l'invention, le procédé de fabrication de préformes de fibres optiques comprend une étape de compression de la préforme avec un taux de compression restant constant pour une même préforme et pouvant varier d'une préforme à l'autre en fonction de leur diamètre moyen respectif de manière à réduire la dispersion de diamètre moyen entre préformes. Cette étape de compression est similaire à l'étape d'étirage mais ici pour chaque préforme, le diamètre d'origine est inférieur au diamètre final.

Dans les premier et deuxième modes de réalisation de l'invention, chaque préforme est soit étirée soit comprimée, et toutes les préformes fabriquées par le procédé selon l'invention sont alors de préférence soit toutes étirées soit toutes comprimées, afin d'éviter d'avoir à réaliser pour certaines préformes un étirage ou une compression avec des taux trop faibles ce qui est en pratique difficile à réaliser. C'est pourquoi, la valeur du taux d'étirage moyen ou de taux de compression moyen d'un ensemble de préformes est avantageusement choisie suffisamment élevée pour réduire au-dessous d'un seuil de 5% la proportion de préformes pour lesquelles le taux d'étirage ou de compression à appliquer est au-dessous du taux minimum que peut fournir le système de motorisation utilisé par le procédé de fabrication. Le taux d'étirage ne doit pas être choisi trop élevé afin de ne pas risquer de déformer de façon excessive les extrémités de la préforme à cause de la soudure avec le barreau de maintien. De manière avantageuse, le taux d'étirage ou de compression moyen d'un ensemble de préformes est compris entre 8% et 25% de la longueur initiale moyenne des préformes considérées.

Dans un troisième mode de réalisation de l'invention, le procédé de fabrication de préformes de fibres optiques comprend une étape d'étirage de la préforme suivie ou précédée d'une étape de compression de la préforme dont les taux d'étirage et de compression sont différents entre eux pour que le taux d'étirage ou de compression résultant pour la préforme soit non nul, restent chacun constant pour une même préforme et peuvent varier d'une préforme à l'autre en fonction de leur diamètre moyen respectif de manière à réduire la dispersion de diamètre moyen entre préformes. L'association successive d'abord d'une étape d'étirage à taux constant pour une même préforme puis d'une étape de compression à taux constant pour une même préforme ou bien d'abord de l'étape de compression puis de l'étape d'étirage, permet d'obtenir un taux résultant d'étirage, si le taux d'étirage est supérieur au taux de compression, ou un taux résultant de compression, si le taux d'étirage est inférieur au taux de compression, qui sont faibles et sinon difficiles à obtenir directement à l'aide respectivement seulement d'une étape d'étirage ou seulement d'une étape de compression. Cela permet la maîtrise d'un étirage résultant ou d'une compression résultante de faible valeur et améliore la qualité des préformes ainsi obtenues. Les étapes d'étirage et de compression sont réalisées successivement au cours de passes distinctes dans le cas où le procédé de fabrication peut comporter plusieurs passes successives de la source de chaleur le long de la préforme. Par exemple, une étape de compression d'une préforme avec un taux de compression constant valant environ 16,5% suivie d'une étape d'étirage de la même préforme avec un taux d'étirage constant valant environ 20% aboutit à un taux résultant d'étirage valant environ 3%. De préférence, le taux d'étirage ou de compression résultant est inférieur à chacun des taux d'étirage et de compression. Le taux d'étirage ou de compression résultant est avantageusement inférieur à chacun des taux minimum d'étirage et de compression que peut fournir le système de motorisation utilisé par le procédé de fabrication. Dans ce troisième mode de réalisation, dans le cas où les préformes présentent un faible diamètre d'origine et dans le cas où les taux d'étirage et de compression sont élevés, de préférence l'étape de compression précède l'étape d'étirage.

L'étirage comme la compression, à condition que les taux d'étirage et de compression ne deviennent pas excessifs, ne semblent pas affecter les propriétés optiques des préformes soumises audit étirage ou à ladite compression.

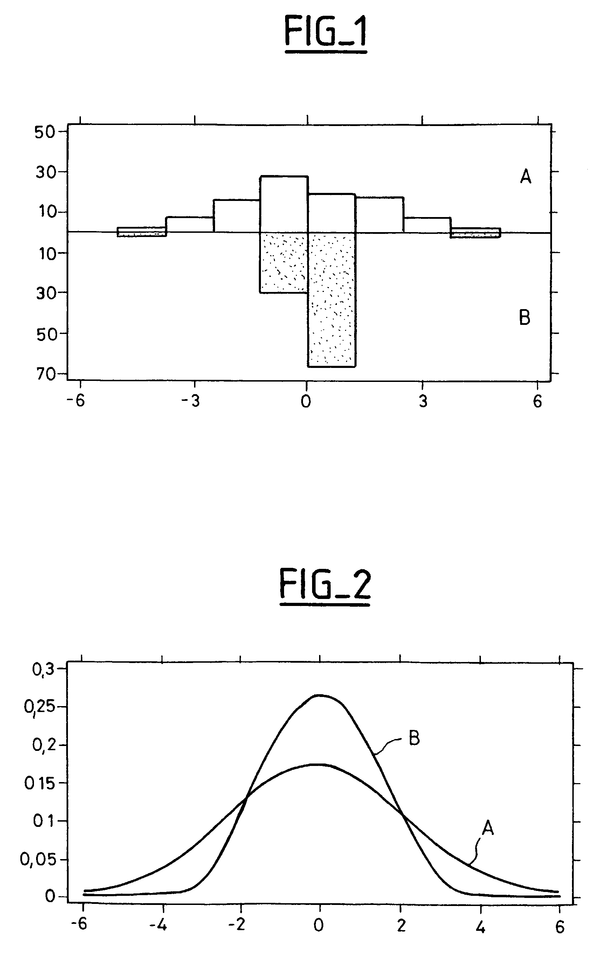

Dans un procédé de fabrication de préformes selon l'invention, correspondant au premier mode de réalisation, c'est-à-dire comprenant une étape d'étirage seulement, avant l'étape d'étirage les diamètres d'un lot de préformes sont mesurés indirectement au travers de leurs paramètres optogéométriques qui sont le diamètre et le profil d'indice. Par exemple, pour une préforme type échelon d'indice fabriquée par procédé MCVD, cela correspond aux zones de coeur, de gaine et de tube. L'étape d'étirage est appliquée à ce lot de préformes dont la moyenne des diamètres finaux après étirage vaut environ 90mm. Le diamètre effectivement obtenu des préformes finales est recalculé par le dispositif d'étirage à partir du diamètre d'origine et du taux d'étirage réellement appliqué par le dispositif d'étirage. Ce lot de préformes obtenu par le procédé selon l'invention est représenté par la courbe B sur les figures 1 et 2. Un autre lot de préformes est obtenu à l'aide d'un procédé identique sauf que ce procédé ne contient pas l'étape d'étirage selon l'invention. La moyenne des diamètres de ce lot test de préformes ainsi obtenues vaut environ 100mm. Ce lot test de préformes est représenté par la courbe A sur les figures 1 et 2. Chacun des lots correspondant aux courbes A et B était constitué d'une soixantaine de préformes.

La figure 1 représente schématiquement des histogrammes mettant en évidence la réduction de la dispersion de diamètre entre préformes par l'utilisation du procédé de fabrication selon le premier mode de réalisation de l'invention. L'histogramme A en clair représente la dispersion du diamètre moyen des préformes du lot test, c'est-à-dire obtenues sans étirage selon l'invention. L'histogramme B en grisé représente la dispersion du diamètre moyen des préformes obtenues par le procédé selon l'invention comportant une étape d'étirage selon l'invention. En abscisse, la valeur 0 représente la moyenne des diamètres moyens des préformes de chaque lot. Les valeurs inscrites en abscisse représentent l'écart relatif en pour cent par rapport à ces moyennes. En ordonnée est représenté le pourcentage par tranche d'histogramme. L'histogramme B apparaît comme beaucoup plus resserré autour de la valeur moyenne 0 que l'histogramme A qui est plus étalé. Or plus l'histogramme est étalé et plus la dispersion de diamètre entre préformes est importante. La réduction d'étalement entre l'histogramme A et l'histogramme B est importante, elle reflète la réduction de dispersion du diamètre moyen entre préformes obtenue par l'utilisation du procédé de fabrication selon l'invention.

La figure 2 représente schématiquement des courbes obtenues à partir des histogrammes de la figure 1 par lissage et mettant en évidence la réduction de la dispersion de diamètre entre préformes par l'utilisation du procédé de fabrication selon l'invention. La courbe A représente la dispersion du diamètre moyen des préformes du lot test. La courbe A a été obtenue par lissage de l'histogramme A. La courbe B représente la dispersion du diamètre moyen des préformes obtenues par le procédé selon l'invention. La courbe B a été obtenue par lissage de l'histogramme B. En abscisse, la valeur 0 représente la moyenne des diamètres moyens des préformes de chaque lot. Les valeurs inscrites en abscisse représentent l'écart relatif en pour cent par rapport à ces moyennes. En ordonnée est représenté la densité de la répartition des diamètres moyens de préforme. La courbe B apparaît comme beaucoup plus resserrée autour de la valeur moyenne 0 que la courbe A qui est plus étalée. Or plus la courbe est étalée et plus la dispersion de diamètre moyen entre préformes est importante. La réduction d'étalement entre la courbe A et la courbe B est importante, elle reflète la réduction de dispersion du diamètre moyen entre préformes obtenue par l'utilisation du procédé de fabrication selon l'invention. La réduction d'écart type entre la courbe A et la courbe B atteint environ 60%.

## Revendications

1. Procédé de fabrication de préformes de fibres optiques comprenant une étape d'étirage de la préforme avec un taux d'étirage restant constant pour une même préforme et pouvant varier d'une préforme à l'autre en fonction de leur diamètre moyen respectif de manière à réduire la dispersion de diamètre moyen entre préformes, le procédé de fabrication comprenant une étape de réalisation d'une préforme primaire suivie d'une étape de réalisation d'une préforme finale à partir de la préforme primaire **caractérisé en ce que** l'étape d'étirage est une étape d'étirage de la préforme finale.

2. Procédé de fabrication de préformes de fibres optiques comprenant une étape de compression de la préforme avec un taux de compression restant constant pour une même préforme et pouvant varier d'une préforme à l'autre en fonction de leur diamètre moyen respectif de manière à réduire la dispersion de diamètre moyen entre préformes, le procédé de fabrication comprenant une étape de réalisation d'une préforme primaire suivie d'une étape de réalisation d'une préforme finale à partir de la préforme primaire **caractérisé en ce que** l'étape de compression est une étape de compression de la préforme finale.

3. Procédé de fabrication de préformes de fibres optiques selon l'une quelconque des revendications précédentes, **caractérisé en ce que** la valeur du taux d'étirage moyen ou de taux de compression moyen d'un ensemble de préformes est choisie suffisamment élevée pour réduire au-dessous d'un seuil de 5 % la proportion de préformes pour lesquelles le taux d'étirage ou de compression à appliquer est au-dessous du taux minimum que peut fournir le système de motorisation utilisé par le procédé de fabrication.

4. Procédé de fabrication de préformes de fibres optiques selon l'une quelconque des revendications précédentes, **caractérisé en ce que** le taux d'étirage ou de compression est compris entre 8 % et 25 %.

5. Procédé de fabrication de préformes de fibres optiques comprenant une étape d'étirage de la préforme suivie ou précédée d'une étape de compression de la préforme dont les taux d'étirage et de compression sont différents entre eux pour que le taux d'étirage ou de compression résultant pour la préforme soit non nul, restent chacun constant pour une même préforme et peuvent varier d'une préforme à l'autre en fonction de leur diamètre moyen respectif de manière à réduire la dispersion de diamètre moyen entre préformes, le procédé de fabrication comprenant une étape de réalisation d'une préforme primaire suivie d'une étape de réalisation d'une préforme finale à partir de la préforme primaire **caractérisé en ce que** l'étape d'étirage et l'étape de compression sont une étape d'étirage et une étape de compression de la préforme finale.

6. Procédé de fabrication de préformes de fibres optiques selon la revendication 5, **caractérisé en ce que** le taux d'étirage ou de compression résultant est inférieur à chacun des taux d'étirage et de compression.

7. Procédé de fabrication de préformes de fibres optiques selon la revendication 6, **caractérisé en ce que** le taux d'étirage ou de compression résultant est inférieur à chacun des taux minimum d'étirage et de compression que peut fournir le système de motorisation utilisé par le procédé de fabrication.

8. Procédé de fabrication de préformes de fibres optiques selon l'une quelconque des revendications 5 à 7, **caractérisé en ce que** l'étape de compression précède l'étape d'étirage.

9. Procédé de fabrication de préformes de fibres optiques selon l'une quelconque des revendications précédentes, **caractérisé en ce que** lors de l'étape d'étirage et/ou lors de l'étape de compression, la préforme est en position horizontale.

10. Procédé de fabrication de préformes de fibres optiques selon l'une quelconque des revendications précédentes, **caractérisé en ce que** l'étape d'étirage et/ou compression de ladite préforme est réalisée par chauffage de ladite préforme par une torche à plasma.

## Claims

1. Method of producing preforms of optical fibres, comprising a step of drawing-out of the preform with a drawing-out factor which remains constant for one and the same preform and which can vary from one preform to another as a function of the respective mean diameter thereof so as to reduce the variation in mean diameter between preforms, the production method comprising a step of producing a primary preform followed by a step of producing a final preform from the primary preform, **characterised in that** the step of drawing-out is a step of drawing-out of the final preform.

2. Method of producing preforms of optical fibres, comprising a step of compaction of the preform with a compaction factor which remains constant for one and the same preform and which can vary from one preform to another as a function of the respective mean diameter thereof so as to reduce the variation in mean diameter between preforms, the production method comprising a step of producing a primary preform followed by a step of producing a final preform from the primary preform, **characterised in that** the step of compaction is a step of compaction of the final preform.

3. Method of producing preforms of optical fibres, according to either one of the preceding claims, **characterised in that** the value of the mean drawing-out factor or of the mean compaction factor of a totality of preforms is selected to be sufficiently high to reduce to below a threshold of 5 % the proportion of preforms for which the drawing-out factor or compaction factor to be applied is below the minimum factor that can be provided by the motor system used in the production method.

4. Method of producing preforms of optical fibres, according to any one of the preceding claims, **characterised in that** the drawing-out factor or compaction factor is between 8 % and 25 % inclusive.

5. Method of producing preforms of optical fibres, comprising a step of drawing-out of the preform followed or preceded by a step of compaction of the preform, the drawing-out and compaction factors of which differ from one another so that the resultant drawing-out or compaction factor for the preform is not zero, remain constant in each case for one and the same preform and can vary from one preform to another as a function of the respective mean diameter thereof so as to reduce the variation in mean diameter between preforms, the production method comprising a step of producing a primary preform followed by a step of producing a final preform from the primary preform, **characterised in that** the step of drawing-out and the step of compaction are a step of drawing-out and a step of compaction of the final preform.

6. Method of producing preforms of optical fibres, according to claim 5, **characterised in that** the resultant drawing-out or compaction factor is less than each of the drawing-out and compaction factors.

7. Method of producing preforms of optical fibres, according to claim 6, **characterised in that** the resultant drawing-out or compaction factor is less than each of the minimum drawing-out and compaction factors that can be provided by the motor system used in the production method.

8. Method of producing preforms of optical fibres, according to any one of claims 5 to 7, **characterised in that** the step of compaction precedes the step of drawing-out.

9. Method of producing preforms of optical fibres, according to any one of the preceding claims, **characterised in that** during the step of drawing-out and/or during the step of compaction the preform is in a horizontal position.

10. Method of producing preforms of optical fibres, according to any one of the preceding claims, **characterised in that** the step of drawing-out and/or compaction of said preform is performed by heating said preform using a plasma torch.

## Patentansprüche

1. Verfahren zur Herstellung von Vorformlingen von optischen Fasern, das eine Stufe des Ziehens des Vorformlings mit einer Ziehrate aufweist, die für denselben Vorformling konstant bleibt und von einem zum anderen Vorformling in Abhängigkeit ihres jeweils mittleren Durchmessers so variieren kann, dass die Dispersion vom mittleren Durchmesser zwischen Vorformlingen reduziert wird, wobei das Herstellungsverfahren eine Stufe der Herstellung eines primären Vorformlings, gefolgt von einer Stufe der Herstellung eines finalen Vorformlings, ausgehend von dem primären Vorformling, aufweist, **dadurch gekennzeichnet, dass** die Stufe des Ziehens eine Stufe des Ziehens des finalen Vorformlings ist.

2. Verfahren zur Herstellung von Vorformlingen von optischen Fasern, das eine Stufe der Kompression des Vorformlings mit einer Kompressionsrate aufweist, die für denselben Vorformling konstant bleibt und von einem zum anderen Vorformling in Abhängigkeit ihres jeweils mittleren Durchmessers so variieren kann, dass die Dispersion vom mittleren Durchmesser zwischen Vorformlingen reduziert wird, wobei das Herstellungsverfahren eine Stufe der Herstellung eines primären Vorformlings, gefolgt von einer Stufe der Herstellung eines finalen Vorformlings, ausgehend von dem primären Vorformling, aufweist, **dadurch gekennzeichnet, dass** die Stufe der Kompression eine Stufe der Kompression des finalen Vorformlings ist.

3. Verfahren zur Herstellung von Vorformlingen von optischen Fasern nach einem der vorhergehenden Ansprüche, **dadurch gekennzeichnet, dass** der Wert der mittleren Ziehrate oder der mittleren Kompressionsrate einer Anordnung von Vorformlingen so ausreichend hoch gewählt wird, um das Ausmaß von Vorformlingen unter eine Schwelle von 5 % zu reduzieren, für die die anzuwendende Zieh- oder Kompressionsrate unter einer Minimalrate liegt, die das vom Herstellungsverfahren verwendete Motorisierungssystem liefern kann.

4. Verfahren zur Herstellung von Vorformlingen von optischen Fasern nach einem der vorhergehenden Ansprüche, **dadurch gekennzeichnet, dass** die Zieh- oder Kompressionsrate zwischen 8 % und 25 % liegt.

5. Verfahren zur Herstellung von Vorformlingen von optischen Fasern, das eine Stufe des Ziehens des Vorformlings aufweist, die von einer Stufe zur Kompression des Vorformlings gefolgt ist oder die dieser vorausgeht, deren Zieh- und Kompressionsraten sich voneinander unterscheiden, damit die für den Vorformling resultierende Zieh- oder Kompressionsrate ungleich Null ist, für denselben Vorformling jeweils konstant bleiben und von einem Vorformling zum anderen in Abhängigkeit ihres jeweils mittleren Durchmessers derart variieren können, dass die Dispersion von mittlerem Durchmesser zwischen Vorformlingen reduziert wird, wobei das Herstellungsverfahren eine Stufe der Herstellung eines primären Vorformlings, gefolgt von einer Stufe der Herstellung eines finalen Vorformlings, ausgehend von dem primären Vorformling, aufweist, **dadurch gekennzeichnet, dass** die Stufe des Ziehens und die Stufe der Kompression eine Stufe des Ziehens und eine Stufe der Kompression des finalen Vorformlings sind.

6. Verfahren zur Herstellung von Vorformlingen von optischen Fasern nach Anspruch 5, **dadurch gekennzeichnet, dass** die resultierende Zieh- oder Kompressionsrate kleiner ist als jede der Zieh- und Kompressionsraten.

7. Verfahren zur Herstellung von Vorformlingen von optischen Fasern nach Anspruch 6, **dadurch gekennzeichnet, dass** die resultierende Zieh- oder Kompressionsrate kleiner ist als jede der minimalen Zieh- und Kompressionsraten, die das vom Herstellungsverfahren verwendete Motorisierungssystem liefern kann.

8. Verfahren zur Herstellung von Vorfomlingen von optischen Fasern nach einem der Ansprüche 5 bis 7, **dadurch gekennzeichnet, dass** die Stufe der Kompression der Stufe des Ziehens vorangeht.

9. Verfahren zur Herstellung von Vorformlingen von optischen Fasern nach einem der vorhergehenden Ansprüche, **dadurch gekennzeichnet, dass** bei der Stufe des Ziehens und/oder der Stufe der Kompression der Vorformling in horizontaler Position ist.

10. Verfahren zur Herstellung von Vorformlingen von optischen Fasern nach einem der vorhergehenden Ansprüche, **dadurch gekennzeichnet, dass** die Stufe des Ziehens- und/oder der Kompression des Vorformlings durch Erhitzen des Vorformlings durch eine Plasmafackel erfolgt.
